# EUROPÄISCHE PATENTSCHRIFT

(11) **EP 2 846 940 B1**
(45) Veröffentlichungstag und Bekanntmachung des Hinweises auf die Patenterteilung: **31.08.2016**
(21) Anmeldenummer: 13720961.5
(22) Anmeldetag: 08.05.2013
(51) Int. Cl.: B21B 27/10

(54) **VORRICHTUNG ZUM KÜHLEN VON WALZEN**
DEVICE FOR COOLING ROLLS
DISPOSITIF DE REFROIDISSEMENT DE CYLINDRES

(30) Priorität: 11.05.2012 DE 102012207957; 17.09.2012 DE 102012216570
(43) Veröffentlichungstag der Anmeldung: 18.03.2015
(73) Patentinhaber: SMS group GmbH, 40237 Düsseldorf (DE)
(72) Erfinder: KIPPING, Matthias, 57562 Herdorf (DE); ALKEN, Johannes, 57076 Siegen (DE); SEIDEL, Ralf, 35690 Dillenburg (DE); MÜLLER, Torsten, 57223 Kreuztal (DE)
(74) Vertreter: Klüppel, Walter
(86) Internationale Anmeldenummer: PCT/EP2013/059561
(87) Internationale Veröffentlichungsnummer: WO 2013/167642

(56) Entgegenhaltungen:
- WO-A1-2008/104037
- DE-A1- 3 616 070

## Beschreibung

### Gebiet der Erfindung

Die vorliegende Erfindung ist auf eine Vorrichtung zum Kühlen von Walzen, insbesondere von Arbeitswalzen gerichtet.

### Stand der Technik

Die US 5,212,975 offenbart eine Vorrichtung zur Kühlung einer Walze in einer Walzstraße, welche mindestens einen Sprühbalken mit mehreren Sprühdüsen umfasst. Dieser Sprühbalken kann translatorisch, drehend oder schwenkend bewegt werden, um den Winkel des Balkens zu der Walzenoberfläche oder dessen Abstand von der Walze einzustellen. Nachteilig an derartigen Vorrichtungen ist eine verbesserungswürdige Effizienz. Insbesondere werden vergleichsweise große Kühlmittelmengen zur ausreichenden Kühlung benötigt.

Die WO 2010/099925 A1 offenbart ein Verfahren und eine Kühlvorrichtung zum Kühlen der Walzen eines Walzgerüstes. Dabei werden die Walzen an mindestens zwei partiellen Bereichen entlang ihres Umfanges mit einer Kühlflüssigkeit gekühlt und durch mindestens zwei der Walzenoberfläche gegenüberliegende, gelenkig miteinander verbundene Kühlschalensegmente gekühlt. Nachteilig an dieser Anordnung ist beispielweise die komplexe Konstruktion der mehrteiligen Kühlschale. Ein weiterer Nachteil kann in einer gemäß dieser Vorrichtung eingeengten Wegführung der Kühlmittelströmung aus dem Kühlspalt bestehen, welche in turbulenten Strömungen bzw. unerwünschten Querströmungen im Kühlspalt resultieren kann.

Gemäß der JP 63303609 werden ein Verfahren und eine Vorrichtung zur Kühlung einer Walze offenbart, bei denen eine dünne Platte gegenüberliegend der Walzenoberfläche einer Arbeitswalze vorgesehen wird. Der zwischen der Walzenoberfläche und der Platte gebildete Spalt ist durch Stellschrauben manuell einstellbar. Das obere und das untere Ende der Schale sind mit Wasserbereitstellungskästen und Wasserableitungskästen versehen. Die Vorrichtung wird ferner nach oben und unten an der Walzenoberfläche durch Bereitstellung einer Pressschraube abgedichtet. Nachteilig an dieser Vorrichtung ist zum Beispiel, dass deren Einstellung manuell erfolgen muss. Dies gilt insbesondere vor dem Hintergrund von mehreren täglichen Walzenwechseln in einer Walzstraße. Verfügt eine Walzstraße beispielsweise, wie üblich, über sieben Walzgerüste mit jeweils zwei Arbeitswalzen, werden diese in vielen Fällen viermal pro Tag gewechselt. In diesem Fall muss die manuelle Einstellung 56-mal pro Tag erfolgen. Ferner sind gemäß dem Stand der Technik die Platten bzw. Kühlschalen an die Walzeneinbaustücke gekoppelt bzw. am Walzgerüst montiert. Dies erfordert bei jedem Walzenwechsel den Abbau der Kühlvorrichtung und/oder die Bereitstellung von zum Beispiel 56 speziell angepassten Einbaustücken. Die dadurch entstehenden Kosten sind erheblich.

Die deutsche Offenlegungsschrift DE 36 160 70 A1 offenbart eine Vorrichtung und ein Verfahren zum Kühlen von Walzen in einem Walzgerüst. Die Vorrichtung umfasst Kühlwasserleitplatten, die jeweils eine gekrümmte Fläche entlang der Umfangsrichtung der Walze haben und nahe der jeweiligen Walze angeordnet sind. Die Vorrichtung umfasst ferner einen Kühlwasserzufuhrverteiler zum Zuführen von Kühlwasser in einen Kühlwasserkanal, der durch die Kühlwasserleitplatte und die Walze begrenzt ist. Die Kühlwasserleitplatten werden von einem Tragelement getragen und es sind Krümmungseinstellorgane vorhanden, um die Krümmung der Leitplatten entsprechend dem Durchmesser der Walzen zu verändern.

Die WO 2008/104037 A1 offenbart eine Vorrichtung zum Kühlen einer Walze, insbesondere einer Arbeitswalze zum Walzen von Walzgut. Diese Vorrichtung umfasst eine zumindest in einem Teilbereich des Umfangs der Walzenoberfläche gegenüberliegende Kühlschale zum Bilden eines mit Kühlfluid durchströmbaren Kühlspaltes zwischen dem Teilbereich der Walzenoberfläche und der Kühlschale. Der Oberbegriff von Anspruch 1 basiert auf der WO 2008/104037 A1.

Der Erfindung liegt die Aufgabe zugrunde, eine bekannte Kühlvorrichtung sowie ein bekanntes Verfahren zur Verwendung der Vorrichtung dahingehend weiterzubilden, dass die Kühlvorrichtung einfacher aufgebaut und der Kühlspalt auf einfache Weise verringerbar oder vergrößerbar ist.

### Offenbarung der Erfindung

Die Erfindung ist durch die Merkmale des Anspruchs 1 gegeben, gemäß dem eine Vorrichtung zum Kühlen einer Walze, insbesondere einer Arbeitswalze zum Walzen von Walzgut, beansprucht ist. Die Vorrichtung umfasst eine zumindest einem Teilbereich des Umfangs der Walzenoberfläche gegenüberliegende (starre) Kühlschale zum Bilden eines mit Kühlfluid durchströmbaren Kühlspalts zwischen dem Teilbereich der Walzenoberfläche und der Kühlschale. Ferner umfasst sie einen ersten, um einen Aufhängungspunkt schwenkbaren Hebel, welcher in Richtung der Walzenoberfläche schwenkbar und mit einem, in Umfangsrichtung der Walze betrachtet, ersten Endbereich der Kühlschale drehbar verbunden ist, sowie einen zweiten, um einen weiteren Aufhängungspunkt schwenkbaren Hebel, welcher in Richtung der Walzenoberfläche schwenkbar und mit dem, in Umfangsrichtung der Walze betrachtet, zweiten Endbereich der Kühlschale verschiebbar verbunden ist, wobei sich der Kühlspalt am ersten Endbereich der Kühlschale bei Schwenken des ersten Hebels in Richtung der Walzenoberfläche verringert und sich der Kühlspalt am zweiten Endbereich der Kühlschale bei Schwenken des zweiten Hebels in Richtung der Walzenoberfläche verringert. Bei Wegschwenken der Hebel von der Walzenoberfläche vergrößert sich der Spalt entsprechend. Mit anderen Worten ist der Kühlspalt durch Schwenken der Hebel um ihre Aufhängungspunkte wahlweise verringerbar oder vergrößerbar. Eine in Umfangsrichtung der Walze betrachtet gleiche Spalthöhe ist dabei nicht zwingend notwendig.

Durch diese relativ einfache mechanische Anordnung kann durch die Schwenkbewegung der Hebel die Kühlschale definiert angestellt werden bzw. der Abstand zwischen Schale und Spalt angepasst werden. Somit wird durch die erfindungsgemäße Konstruktion eine vereinfachte bzw. verbesserte Kühlvorrichtung zur Kühlung eines Oberflächenbereichs einer Walze bereitgestellt.

Gemäß einer bevorzugten Ausführungsform der Vorrichtung ist der zweite Endbereich der Kühlschale gleitend oder rollend mit dem zweiten Hebel verbunden. Durch eine solche relative, gleitende oder rollende Bewegung kann die Kühlschale an ihren zweiten Endbereich definiert auf dem bzw. durch den zweiten Hebel geführt werden. Eine gleitende Verbindung kann zum Beispiel durch eine Kombination eines Federelements und einer Gleitleiste in Zusammenwirkung mit einem auf der Gleitleiste gleitenden Gleitstein ermöglicht werden. Durch das Federelement kann gewährleistet werden, dass die Gleitleiste und der Gleitstein nicht voneinander abheben. Alternativ könnte am Hebel oder der Kühlschale eine Rolle vorgesehen werden. Durch die Rolle wäre eine rollende Relativbewegung zwischen Hebel und Kühlschale möglich. Die Rolle könnte in einer Führung geführt werden, welche ein Abheben der Rolle vermeidet. Alternativ könnte die Rolle ebenfalls durch ein elastisches Element bzw. ein Federelement in Kontakt mit der Oberfläche gehalten werden, auf der sie rollt. Auf welcher der beiden Elemente (Kühlschale und zweiter Hebel) die Rolle angeordnet wird bzw. auf welchen der beiden Elemente sich jeweils der Gleitstein oder die Gleitleiste befindet ist dabei unerheblich. Generell könnte der Gleitstein in einer Führung auf der Gleitleiste geführt sein, welche ein Abheben des Steins von der Leiste verhindert. Alternativ könnte die Gleitleiste selbst als Führung zum Verhindern des Abhebens der Gleitsteins von der Gleitleiste ausgebildet sein.

Gemäß einer bevorzugten Ausführungsform der Vorrichtung ist der zweite Endbereich der Kühlschale, derart mit dem zweiten Hebel verbunden, dass dieser sich bei Bewegung des zweiten Hebels auf einer definierten, vorzugweise linearen, Bahn bewegt. Durch diese Anordnung kann insbesondere die Berechenbarkeit der Bewegungsbahn der Kühlschale, insbesondere von deren zweiten Endbereich, verbessert werden.

Gemäß einer weiteren bevorzugten Ausführungsform der Vorrichtung sind die Aufhängungspunkte der Hebel gegenüberliegend der von der Walzenoberfläche abgewandten Seite der Kühlschale angeordnet. Eine derartige Anordnung erlaubt zum Beispiel eine besonders kompakte Bauform der Vorrichtung.

Gemäß einer weiteren bevorzugten Ausführungsform der Vorrichtung erstreckt sich die jeweils durch die Aufhängungspunkte erstreckende Schwenkachse der Hebel im Wesentlichen parallel zur Walzenachse. Bevorzugt fallen zudem die beiden Aufhängungspunkte zusammen bzw. beide Aufhängungspunkte liegen in einem Punkt. Auch dieses Merkmal vereinfacht wiederum die Konstruktion der Vorrichtung und erleichtert die Berechenbarkeit der Bewegungen bzw. der Positionen der Elemente der Kühlvorrichtung.

Gemäß einer weiteren bevorzugten Ausführungsform der Vorrichtung, umfasst diese weiterhin eine Düse zum Einleiten von Kühlfluid in den Spalt, welche an einem der Endbereiche der Kühlschale zum im Wesentlichen tangentialen Einleiten des Kühlmediums in den Spalt ausgebildet ist, vorzugsweise zum Einleiten von Kühlfluid entgegen der Drehrichtung der Walze in den Spalt. Durch eine derartige Anordnung kann die Kühlwirkung der Vorrichtung weitergehend verbessert werden, wobei insbesondere eine hohe Relativgeschwindigkeit zwischen der Walzenoberfläche und dem Kühlfluid die Wärmeübertragung steigert. Eine im Wesentlichen tangentiale Einleitung des Kühlfluids in den Spalt kann zudem die Grenzschichtdicke der Strömung der Kühlflüssigkeit im Spalt verringern helfen und so wiederum die Kühlwirkung verbessern.

Gemäß einer weiteren bevorzugten Ausführungsform der Vorrichtung umfasst diese eine erste Antriebseinheit zum Schwenken des ersten Hebels um den ersten Aufhängungspunkt und eine zweite Antriebseinheit zum Schwenken des zweiten Hebels um den weiteren Aufhängungspunkt. Solche Antriebseinheiten können zum Beispiel Elektromotoren, pneumatische Antriebseinheiten oder hydraulische Antriebseinheiten umfassen.

Gemäß einer weiteren bevorzugten Ausführungsform der Vorrichtung weist der erste Hebel einen ersten Endbereich und einen (dem ersten Endbereich gegenüberliegenden) zweiten Endbereich auf, wobei dessen erster Endbereich drehbar mit dem, in Umfangsrichtung der Walze betrachtet, ersten Endbereich der Kühlschale verbunden ist und dessen zweiter Endbereich schwenkbar an dem ersten Aufhängungspunkt lagerbar bzw. anbringbar ist. Ferner umfasst der zweite Hebel vorzugsweise einen ersten Endbereich und einen (dem ersten Endbereich gegenüberliegenden) zweiten Endbereich, wobei dessen erster Endbereich verschiebbar (zum Beispiel rollend oder gleitend) mit dem, in Umfangsrichtung der Walze betrachtet, weiteren Endbereich der Kühlschale verbunden ist und dessen zweiter Endbereich schwenkbar an dem weiteren Aufhängungspunkt lagerbar bzw. anbringbar ist.

Gemäß einer weiteren bevorzugten Ausführungsform der Vorrichtung sind die erste und die zweite Antriebseinheit jeweils mit dem ersten Endbereich der Hebel zum Schwenken der Hebel verbunden. Dieses Merkmal ermöglicht eine besonders gute Kraftübertragung der Antriebseinheit auf die Hebel und erhöht somit die Effizienz der Vorrichtung.

Gemäß einer weiteren bevorzugten Ausführungsform der Vorrichtung umfasst der erste Hebel an seinem ersten Endbereich ein Ende zur Kontaktierung der Walzenoberfläche und der zweite Hebel an seinem ersten Endbereich ein Ende zur Kontaktierung der Walzenoberfläche. Dabei können die Enden je eine drehbare Rolle oder Klötze bzw. Gleitleisten zur Kontaktierung der Walzenoberfläche umfassen. Durch dieses Merkmal können die Hebel Kontakt zur Walzenoberfläche herstellen und so zum Beispiel eine Bestimmung der Position und/oder des Durchmessers der Walze ermöglichen. Die Rollenachsen dieser Rolle liegen dabei bevorzugt im Wesentlichen parallel zu der Rollenachse der Walze.

Dies ist insbesondere vor dem Hintergrund relevant, dass die Walzen einen Abschliffbereich aufweisen. Normalerweise muss die Höhe des Kühlspalts nach einem Walzenwechsel aufgrund des normalerweise durch den Wechsel veränderten Walzendurchmessers neu manuell eingerichtet werden. Mit anderen Worten muss der Abstand der Kühlschale zur Walzenoberfläche neu justiert werden. Dies ist insbesondere bei einer Vielzahl von Walzenwechseln zeit- und kostenaufwändig. Darüber hinaus wird festgestellt, dass Sensoren zur Abstandsmessung (insbesondere optische) Sensoren häufig fehleranfällig sind und daher sich wenig für raue Walzwerksbedingungen eignen.

Gemäß einer weiteren bevorzugten Ausführungsform der Vorrichtung, ist diese derart ausgebildet, dass das Ende des ersten Hebels in Umfangsrichtung der Walze betrachtet die Walzenoberfläche vor bzw. neben dem ersten Endbereich der Kühlschale kontaktiert und das Ende des zweiten Hebels in Umfangsrichtung der Walze betrachtet die Walzenoberfläche hinter bzw. neben dem zweiten Endbereich der Kühlschale kontaktiert. Eine derartige Anordnung hat den Vorteil, dass die Hebel den Kühlspalt an sich nicht stören bzw. nicht in diesen hineingreifen. Es ist allerdings prinzipiell ebenso möglich, dass sich die Hebel durch Schlitze in der Kühlschale und durch den Spalt zur Walzenoberfläche erstrecken und dabei wahlweise von der Walzenoberfläche durch Schwenken abhebbar sind.

Gemäß einer weiteren bevorzugten Ausführungsform der Vorrichtung spannen die Hebel, wenn die Enden der Hebel die Walzenoberfläche kontaktieren, sowie der zwischen den Enden der Hebel liegende Teilbereich der Walzenoberfläche in einer zur Walzenachse senkrecht liegenden Ebene im Wesentlichen ein Dreieck auf, wobei die Walzenoberfläche eine gekrümmte Seite des Dreiecks bildet und die beiden Hebel die daran angrenzenden verbleibenden Seiten des Dreiecks bilden. Diese Anordnung stellt lediglich eine mögliche Anordnung der Hebel dar. Die Hebel sind im Allgemeinen bevorzugt zur Kontaktierung zweier, in Umfangsrichtung der Walze betrachtet, unterschiedlicher Punkte auf der Walzenoberfläche bei Schwenken auf die Walzenoberfläche ausgebildet.

Gemäß einer weiteren bevorzugten Ausführungsform der Vorrichtung ist das erste Ende des ersten Hebels mit dem ersten Endbereich der Kühlschale über einen Drehpunkt (Drehgelenk) verbunden. Ferner umfasst die Vorrichtung vorzugsweise einen mit dem ersten Hebel starr verbundenen ersten Arm sowie einen mit dem ersten Endbereich der Kühlschale starr verbundenen zweiten Arm; wobei der Drehpunkt mit dem ersten Hebel über den ersten Arm verbunden ist und die Kühlschale über den zweiten Arm mit dem Drehpunkt verbunden ist. Ferner ist der Drehpunkt bevorzugt in einer senkrecht zur axialen Richtung der Walze stehenden Ebene beweglich. Durch die Wahl von entsprechenden Armlängen kann die Vorrichtung vielseitig verwendet werden.

Insbesondere ist es möglich, dass die Arme längenverstellbar ausgebildet sind. Auch die Hebel können längenverstellbar ausgebildet sein. Die Arme können ferner lösbar mit den Hebeln oder der Kühlschale verbunden sein, sodass in Umfangsrichtung betrachtet, verschieden lange Kühlschalen oder unterschiedlich gebogene bzw. geformte Kühlschalen einsetzbar sind. Auch die verschiebbare Verbindung zwischen dem zweiten Hebel und dem zweiten Ende der Kühlschale kann zum Wechsel der Kühlschale lösbar sein.

Gemäß einer weiteren bevorzugten Ausführungsform der Vorrichtung sind die Hebel jeweils derart um ihren jeweiligen Aufhängungspunkt schwenkbar angeordnet, dass sie jeweils durch Schwenken mit dem an ihrem ersten Endbereich liegenden Ende mit der Walzenoberfläche in Kontakt bringbar bzw. an diese anstellbar sind und wieder von dieser abhebbar bzw. wegschwenkbar sind.

Gemäß einer weiteren bevorzugten Ausführungsform der Vorrichtung, umfassen die Antriebseinheiten jeweils mindestens eine Kolbenzylindereinheit, welche bevorzugt an einem von deren Enden (starr) mit dem ersten Endbereich des jeweiligen Hebels zum Schwenken des Hebels verbunden sind und an ihrem zweiten Ende drehbar gelagert sind. Ferner sind die Kolbenzylindereinheiten - optional - jeweils über einen starren Arm mit dem ersten Endbereich des jeweiligen Hebels verbunden. Durch die Bereitstellung von entsprechenden Armen kann die Vorrichtung leicht in bereits bestehende Systeme integriert werden. So können bereits vorhandene Aufhängungspunkte verwendet werden. Ferner können möglicherweise bereits vorhandene Kolbenzylindereinheiten verwendet werden.

Gemäß einer weiteren bevorzugten Ausführungsform der Vorrichtung, ist der zweite Endbereich der Kühlschale mit dem ersten Endbereich des zweiten Hebels über mindestens ein elastisches Element oder eine Führungsschiene verbunden. Durch ein solches elastisches Element oder eine Führungsschiene kann eine definierte Kontaktierung der Kühlschale mit dem zweiten Hebel gewährleistet werden.

Gemäß einer weiteren bevorzugten Ausführungsform der Vorrichtung, umfasst die Vorrichtung weiterhin ein Auswertungssystem zur Bestimmung der Position der Walze und/oder zum Einstellen der Höhe des Kühlspalts, welches bei bzw. durch Kontaktierung der Enden der beiden Hebel mit der Walzenoberfläche und nach Maßgabe der bekannten Geometrie und/oder Anordnung der Hebel, der Kühlschale, ggfs. der drehbaren Verbindung zwischen dem ersten Hebel sowie der Lage der Aufhängungspunkte und des Durchmessers der Walze zur Berechnung der Höhe des Kühlspalts ausgebildet ist. Ob bzw. wann die Hebel in Kontakt mit der Walzenoberfläche stehen, kann zum Beispiel anhand eines Druckgebers einer Kolbenzylindereinheit festgestellt werden. Im Falle eines elektrischen Antriebs, kann dies zum Beispiel durch eine Antriebsstrommessung festgestellt werden. Ferner könnte ein Winkelmessgerät an den Aufhängungspunkten installiert sein, um die Winkelstellung bzw. den Schwenkwinkel der Hebel zu bestimmen. Zusätzlich oder alternativ könnte auch ein Weggeber an den Antriebseinheiten vorgesehen sein, sodass anhand der bekannten Geometrie der Hebel und der Kühlschale auf die Walzenposition und ebenfalls auf den Abstand zwischen Kühlschale und Walzenoberfläche geschlossen werden könnte. Bevorzugt werden die Enden der Hebel wieder von der Walzenoberfläche für den Walzbetrieb abgehoben. Somit wird ein Verschleiß der Vorrichtung ausgeschlossen.

Gemäß einer weiteren bevorzugten Ausführungsform der Vorrichtung, erstrecken sich die Hebel jeweils stangenförmig in einer senkrecht zur axialen Richtung der Walze betrachteten Ebene zu dem am ersten Endbereich liegenden Ende. Stangenförmig ist allerdings nicht derart einschränkend zu verstehen, dass lediglich gerade Verläufe möglich sind, die Hebel können vielmehr auch Knicke oder Krümmungen aufweisen, sollen allerdings bevorzugt starr sein bzw. in ihrer Geometrie definiert. Es können auch parallel zur axialen Richtung der Walze mehrere Hebel vorgesehen werden, sodass in einer solchen Richtung mehrere erste Hebel und/oder zweite Hebel angeordnet sind.

Die Hebel können sich ebenfalls im Wesentlichen plattenförmig, vorzugsweise in einer parallel zur axialen Richtung der Walzen liegenden Ebene, erstrecken. Wiederum muss es sich allerdings nicht um eine ebene bzw. gerade Form handeln, auch Knicke oder Krümmungen der Platte sind möglich, solange die Geometrie der Platte definiert bzw. bekannt ist.

Die Kühlschale ist ebenfalls bevorzugt entlang der Umfangsrichtung der Walze starr und/oder gelenkfrei ausgebildet und erstreckt sich parallel zur axialen Richtung der Walze zumindest teilweise über die Walze bzw. die Walzenbreite. Wird in den Spalt zwischen der Kühlschale und der Walzenoberfläche Kühlmedium mittels einer Düse eingeleitet, kann diese parallel zur axialen Richtung der Walze eine Reihe von mehreren Düsen umfassen oder in dieser Richtung schlitzartig ausgebildet sein.

Gemäß einer weiteren bevorzugten Ausführungsform der Vorrichtung, umfasst die Vorrichtung einen Abstreifer zum Abstreifen von aus dem Kühlspalt an einem Ende der Kühlschale austretendem Kühlfluid, wobei der Abstreifer sich vorzugsweise plattenförmig von der Oberfläche der Walze weg erstreckt, um die aus dem Kühlspalt austretende Kühlmittelströmung von der Walze weggerichtet abzuleiten. Ein solcher Abstreifer hat insbesondere gegenüber einem geschlossenen Auffangkasten den Vorteil, dass die aus dem Kühlspalt austretende Kühlmittelströmung nicht wesentlich gestört wird, sondern lediglich abgelenkt wird. Es werden insbesondere keine Querströmungen in dem Kühlspalt durch den Aufstau in einem geschlossenen Kasten hervorgerufen, welche einer gleichmäßigen Kühlwirkung des Kühlmittels auf die Walzenoberfläche erheblich entgegenwirken.

Generell können die Endbereiche der Hebel oder der Kühlschale auch als Hälften der Hebel oder Kühlschale beschrieben werden. Die Kühlschale an sich besteht vorzugsweise lediglich aus einem starren bzw. inelastischen / nichtfaltbaren oder knickbaren Teil. Gleichermaßen sind die Hebel im Wesentlichen bevorzugt starr ausgebildet. Die Lagerung der Hebel kann zum Beispiel an einem gemeinsamen oder verschiedenen Aufhängungspunkten erfolgen. Diese Punkte können sich auf bereits in einer Walzanlage bzw. einem Walzwerk befindenden Elementen befinden und sind daher nicht zwingend Teil der offenbarten Kühlvorrichtung.

Ferner ist die Erfindung auf eine Kühleinrichtung gerichtet, welche eine Vorrichtung gemäß einer der vorhergehenden Ausführungsformen umfasst, wobei die Einrichtung einen im Wesentlichen horizontal und unabhängig von der Position der Walze verfahrbaren Tragrahmen umfasst, durch den die Antriebseinheiten und/oder die Hebel getragen werden. Mit anderen Worten sind die Aufhängungspunkte auf dem Tragrahmen positioniert. Das bedeutet, dass die Kühlschale unabhängig von dem Walzenständer oder den Walzeneinbaustücken montier- und/oder verfahrbar ist. Dies erleichtert den Wechsel der Walze erheblich und vermeidet eine langwierige Montage und Demontage der Kühlvorrichtung beim Walzenwechsel. Optional sind die Antriebseinheiten und/oder die Hebel drehbar an dem Tragrahmen gelagert.

Im Allgemeineren sind die Aufhängungspunkte relativ zueinander ortsfest.

Gemäß einer bevorzugten Ausführungsform der Kühleinrichtung, umfasst diese ferner eine Arbeitswalze, wobei die Kühlschale durch Verfahren des Tragrahmens und/oder die Antriebseinheiten an die Walzenoberfläche anstellbar ist.

Die Vorrichtung kann ebenfalls auf ein Verfahren zur Verwendung der beschriebenen Vorrichtung gerichtet sein. Das Verfahren kann sich dabei auf ein Verfahren zur Bestimmung der Walzenposition und/oder zur Einstellung des Abstands zwischen Kühlschale und Walzenoberfläche beziehen und einen oder mehrere der folgenden Schritte umfassen: Bereitstellen einer Arbeitswalze; Bestimmen des Durchmessers der Arbeitswalze; Einbauen der Arbeitswalze in einem Walzgerüst; Annähern der Kühlvorrichtung an die Walzenoberfläche, vorzugsweise mittels des verfahrbaren Tragrahmens; Kontaktieren der Walzenoberfläche durch die Hebel, insbesondere durch deren Enden oder die an den Enden vorhandenen Rollen, mittels Schwenken der Hebel in Richtung der Walzenoberfläche; Berechnen der Position der Arbeitswalze, insbesondere nach Maßgabe der bekannten Geometrie und/oder Anordnung der Hebel, der Kühlschale, ggfs. der drehbaren Verbindung zwischen dem ersten Hebel sowie der Lage der Aufhängungspunkte und des Durchmessers der Walze; Abheben der Hebel durch Wegschwenken der Hebel von der Walzenoberfläche; Einstellen des Abstands der Kühlschale durch Schwenken der Hebel; Leiten von Kühlflüssigkeit in den Kühlspalt; Starten eines Walzvorgangs durch die Arbeitswalze; Stoppen des Walzvorgangs; Vergrößern des Kühlspalts durch Schwenken der Hebel und/oder durch Verfahren der Vorrichtung mittels des Tragrahmens; und Ausbau der Arbeitswalze aus dem Walzgerüst. Dabei können die Schritte zumindest teilweise ebenfalls in anderer Reihenfolge ausgeführt werden.

Sämtliche Merkmale der oben beschriebenen Ausführungsformen können miteinander kombiniert werden oder gegeneinander ausgetauscht werden.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:
- Figur 1: einen schematischen Querschnitt durch ein erfindungsgemäßes Ausführungsbeispiel einer an eine Walze angestellten Kühlvorrichtung;
- Figur 2: die in Figur 1 dargestellte Vorrichtung mit weiteren Details;
- Figur 3: die in den Figuren 1 und 2 dargestellte Vorrichtung mit weiteren Details zur Anstellung der Enden der Hebel der Kühlvorrichtung an verschiedene Walzendurchmesser; und
- Figur 4: eine Kühleinrichtung umfassend eine Kühlvorrichtung gemäß den Figuren 1 bis 3.

### Detaillierte Beschreibung der Ausführungsbeispiele

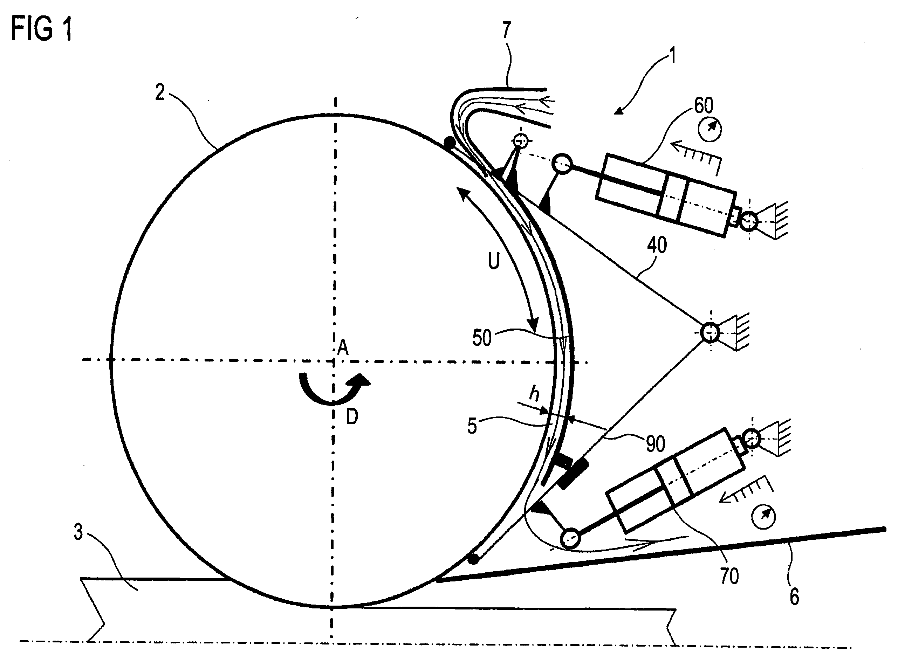

Die Figur 1 offenbart ein erfindungsgemäßes Ausführungsbeispiel einer Kühlvorrichtung 1. Diese Kühlvorrichtung 1 umfasst eine Kühlschale 50, welche sich zumindest über einen Teilbereich der Walzenoberfläche in Umfangsrichtung U der Walze 2 erstreckt. Die Längsachse bzw. Drehachse der Walze 2 erstreckt sich dabei bevorzugt in axialer Richtung A und ist um die Walzenachse, insbesondere in der Drehrichtung D drehbar. Wie in der Figur 1 dargestellt, befindet sich die Kühlvorrichtung 1 bevorzugt auf der Auslaufseite der Walze 2 zum Walzen eines Metallbandes 3, kann sich allerdings ebenfalls auf der gegenüberliegenden Einlaufseite befinden. Die Walze 2 stellt dabei bevorzugt eine Arbeitswalze 2 in einem Walzgerüst einer Walzstraße dar (nicht abgebildet). Über eine Düse 7 kann Kühlfluid, vorzugsweise eine Flüssigkeit, wie zum Beispiel Wasser, in den zwischen der Kühlschale 50 und der Walzenoberfläche gebildeten Kühlspalt 5 eingeleitet werden. Diese Düse 7 kann wie dargestellt bevorzugt an einem oberen Ende der Kühlschale 50 angeordnet sein, sodass durch die Düse 7 in den Kühlspalt 5 eingeleitetes Kühlmittel den Kühlspalt 5 am unteren Ende wieder verlässt. Dabei verlässt der Fluidstrom den Kühlspalt 5 vorzugsweise barrierefrei. Insbesondere wird er nicht durch einen Wasserkasten eingeengt, welcher zu Turbulenzen oder Querströmungen führen könnte, die sich sogar bis in den Spalt 5 zurückerstrecken könnten. Es ist lediglich, wie dargestellt optional vorgesehen, dass ein Abstreifer 6 den Walzenumfang bzw. die Walzenoberfläche stromabwärts des Spalts 5 kontaktiert, um Wasser von der Walzenoberfläche und vom Metallband 3 wegzuleiten. Solch ein Abstreifer 6 kann vorzugsweise durch eine Metall-, Kunststoff- oder Holzplatte gebildet sein.

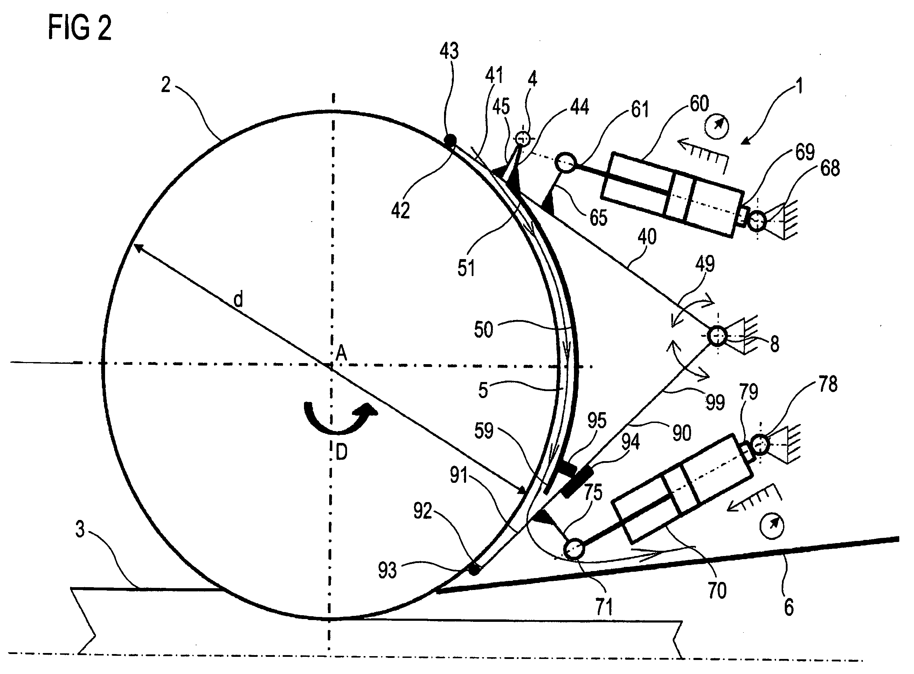

Die Anstellung der Kühlschale 50 an die Walzenoberfläche kann mittels einer Anordnung zweier Hebel 40, 90 und zweier Antriebseinheiten 60, 70 erfolgen, deren Anordnung und Funktion genauer in Bezug auf die Figur 2 beschrieben werden. Durch die Kühlvorrichtung 1 ist somit eine Verstellbarkeit der Spalthöhe h des Kühlspalts 5 zwischen der Oberfläche bzw. dem Umfang der Walze 2 und der Kühlschale 50 möglich. Mit anderen Worten ist der Abstand h zwischen Kühlschale 50 und der Walze 2 verstellbar bzw. einstellbar.

Der Übersichtlichkeit halber wurde bei der Beschreibung der Figur 1 nicht auf sämtliche Details Bezug genommen. Die Figur 2 zeigt die Kühlvorrichtung 1 gemäß der Figur 1 detaillierter, wobei allerdings zur besseren Übersichtlichkeit die Düse 7 nicht in der Figur 2 dargestellt ist. An ihrem oberen Ende bzw. ihren Endbereich 51 ist die Kühlschale 50 mit einem ersten Endbereich 41 eines Hebels 40 verbunden. Der Hebel 40 ist ferner an einem zweiten Ende 49 schwenkbar an einem Lager 8 gelagert. Dabei kann die Schwenkrichtung in einer senkrecht zur Walzenachse A liegenden Ebene liegen. Bevorzugt ist der Hebel 40 an seinem ersten Endbereich 41 drehbar mit dem oberen Ende 51 der Kühlschale verbunden. Ein zweiter Hebel 90 ist ebenfalls schwenkbar an einem seiner Enden 99 an einem Aufhängungspunkt 8 schwenkbar gelagert, wobei ein erster Endbereich 91 des zweiten Hebels 90 mit einem unteren Endbereich 59 der Kühlschale 50 verschiebbar verbunden ist. Eine solche Verschiebbarkeit kann wie dargestellt durch einen Gleitstein 95 und eine entsprechende Gleitleiste 94 ermöglicht werden, worauf später detaillierter Bezug genommen wird.

Die Aufhängungspunkte 8 beider Hebel 40, 90 bzw. die Lagerungspunkte oder Schwenkpunkte 8 beider Hebel 40, 90 können dabei auch in einem gemeinsamen Punkt 8 liegen. Dieser Punkt 8 kann zum Beispiel gegenüber der Seite der Kühlschale 50 liegen, welche von der Oberfläche der Walze 2 abgewandt ist. Der erste Hebel 40 und der zweite Hebel 90 sind jeweils durch Antriebseinheiten 60, 70 antreibbar bzw. schwenkbar. Dazu greifen die Antriebseinheiten 60, 70 bevorzugt am jeweiligen Endbereich 41, 91 der Hebel 40, 90 an. Wie in der Figur 2 dargestellt, ist es möglich, dass die Antriebseinheiten 60, 70 durch Kolbenzylindereinheiten 60, 70 gebildet sind. Solche Kolbenzylindereinheiten 60, 70 können mit einem ihrer Enden 69, 79 schwenkbar an Aufhängungspunkten 68, 78 gelagert sein. Die Schwenkrichtung kann wiederum in einer Ebene liegen, welche senkrecht zur axialen Richtung A der Walze 2 steht. Die vorliegende Erfindung ist allerdings nicht auf Kolbenzylindereinheiten als Antriebseinheiten 60, 70 beschränkt, vielmehr können ebenso andere Antriebsarten, wie pneumatische Antriebe oder elektrische bzw. elektromechanische Antriebe Verwendung finden. Die Antriebseinheiten können im Allgemeinen über Weggeber verfügen, durch die auf die Orientierung der Hebel 40, 90 geschlossen werden kann. Alternativ oder zusätzlich kann eine Winkelmessung erfolgen, welche den Schwenkwinkel der Hebel 40, 90 bestimmt. Eine solche Messung kann bevorzugt jeweils am Schwenkpunkt 8 erfolgen. Ferner können im Fall der Verwendung von Kolbenzylindereinheiten 60, 70, diese Einheiten mit Druckgebern ausgerüstet sein, sodass ein Kontaktieren der Hebel 40, 90 mit der Walzenoberfläche feststellbar ist. Alternativ kann im Fall der Verwendung von Elektromotoren der aufgenommene Strom überwacht werden, um einen Widerstand bei Kontaktierung der Hebel 40, 90 festzustellen.

Die Verbindung zwischen dem ersten Endbereich 41 des ersten Hebels 40 und dem ersten Endbereich 51 der Kühlschale 50 ist bevorzugt drehbar ausgebildet. Dabei umfasst die Vorrichtung vorzugsweise einen Drehpunkt 4, welcher über einen Arm 45 mit dem Hebel 40 verbunden ist und über einen weiteren Arm 44 mit der Kühlschale 50 verbunden ist. Dabei sind die Arme 44, 45 jeweils starr mit der Kühlschale 50 und dem ersten Hebel 40 verbunden. Ferner ist es möglich, dass die erste Kolbenzylindereinheit 60 über einen Arm 65 ebenfalls starr mit dem ersten Hebel 40 verbunden, allerdings schwenkbar bzw. drehbar an einer Aufhängung 68 gelagert ist. Gleiches gilt für die zweite Kolbenzylindereinheit 70, welche bevorzugt über einen Arm 75 starr mit einem ersten Endbereich 91 des zweiten Hebels 90 verbunden ist.

Wie bereits zuvor beschrieben, kann das untere bzw. das zweite Ende 59 der Kühlschale 50 mit dem zweiten Hebel 90 verschiebbar verbunden sein. Zum Beispiel kann die Kühlschale 50 über einen Gleitstein 95 verfügen, welcher auf einer Gleitleiste 94 des zweiten Hebels 90 gleitet. Damit sich die Kühlschale 50 nicht ungewollt von dem zweiten Hebel 90 entfernt, können Kühlschale 50 und Hebel 90 durch eine Feder miteinander verbunden sein (nicht abgebildet). Dies gilt insbesondere bei Wegschwenken des Hebels 90 von der Walzenoberfläche. Natürlich kann der Gleitstein 95 alternativ auf dem Hebel angeordnet werden und die Gleitleiste 94 auf der Kühlschale 50. Ferner ist es beispielsweise möglich, dass der Gleitstein 95 in einer Führung geführt ist, welche ein Abheben des Gleitsteins 95 von der Gleitleiste 94 verhindert. Eine weitere Möglichkeit zur verschiebbaren Verbindung zwischen Hebel 90 und Kühlschale 50 besteht darin, entweder an den zweiten Hebel 90 oder an der Kühlschale 50 eine Rolle vorzusehen (nicht abgebildet), welche auf der Kühlschale 50 oder dem Hebel 90 abrollt. Die Rolle könnte in einer Führung geführt sein, welche ein Abheben der Rolle von ihrer gegenüberliegenden Rollfläche verhindert.

An den Aufhängungspunkten 8 der Hebel 40, 90 gegenüberliegenden Endbereichen 41, 91 weisen die Hebel 40, 90 jeweils ein Ende 42, 92 auf. An diesen Enden 42, 92 kann bevorzugt jeweils eine, vorzugsweise drehbare Rolle 43, 93 angeordnet sein, deren Drehachse im Wesentlichen parallel zu der Drehachse A der Walze 2 liegt. Alternativ könnte eine Gleitleiste (nicht abgebildet) an den Enden 42, 92 der Hebel 40, 90 angeordnet sein. Dabei können die Hebel 40, 90 derart ausgebildet und schwenkbar angeordnet sein, dass sie die Walzenoberfläche in Umfangsrichtung U betrachtet einerseits oberhalb des oberen Endes 51 der Kühlschale 50 kontaktieren (erster Hebel 40) und andererseits unterhalb des unteren Endes 59 der Kühlschale 50 kontaktieren (zweiter Hebel 90). Der Kontakt ist vorzugsweise lediglich über die Oberfläche der an den Hebelenden 92, 42 angeordneten Rollen 43, 93 oder Leisten herstellbar. Ist der Durchmesser d der Walze 2 bekannt, so ist bei Kontakt der Hebelenden 42, 92 mit der Walzenoberfläche ebenfalls deren Position in einer senkrecht zur axialen Richtung A stehenden Ebene gegeben. Die Position der Aufhängungspunke 8 wird ebenfalls bevorzugt nicht oder nur definiert verändert. Die Positionen der Antriebseinheiten 60, 70 bzw. von deren Aufhängungspunkten 68, 78 und den Aufhängungspunkten 8 sind relativ zueinander festgelegt bzw. fix.

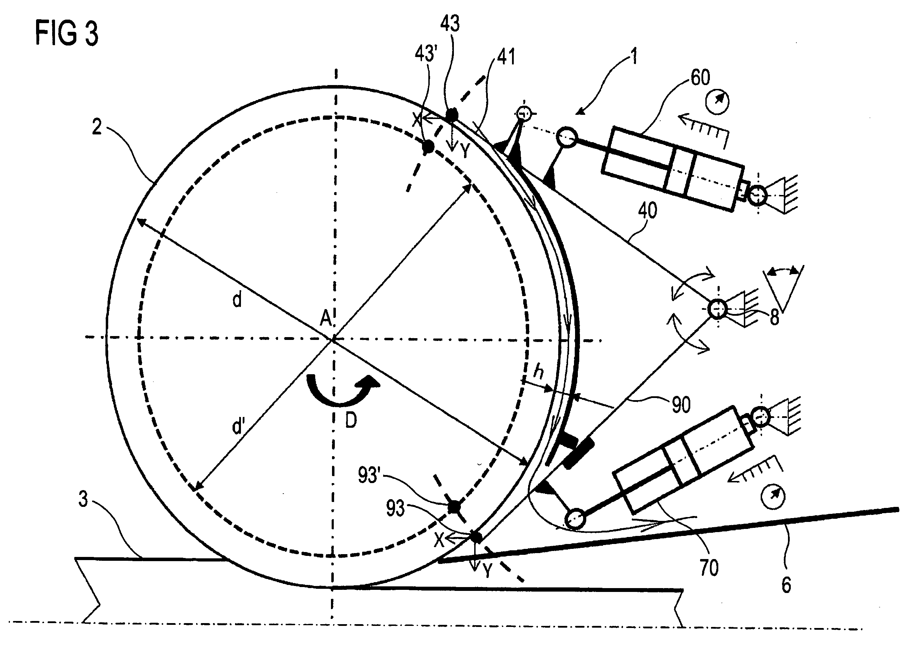

Die Figur 3 zeigt schematisch eine Anstellung der Vorrichtung 1 gemäß den vorhergehenden Figuren an Walzen 2 mit verschiedenen Durchmessern d, d'. So kann die Walze 2 zum Beispiel nach einem Abschliff einen relativ zum Durchmesser d kleineren Durchmesser d' aufweisen. Durch Schwenken der Hebel 40, 90 kann die Vorrichtung 1 ebenfalls an diesen kleineren Durchmesser d' angepasst werden. Wie gestrichelt dargestellt kann der erste Hebel 40 um den Aufhängungspunkt 8 in Richtung der Walzenoberfläche geschwenkt werden bis die Rolle 43, die Walze 2 mit Walzendurchmesser d' im Punkt 43' kontaktiert. Gleiches gilt für den zweiten Hebel 90, welcher in Richtung der Walzenoberfläche schwenkbar ist, bis die Rolle 93 die Oberfläche der Walze 2 mit Durchmesser d' im Punkt 93' kontaktiert. Bei bekanntem Durchmesser d' und der bekannten Anordnung der Hebel 40, 90, des Verfahrwegs der Kolbenzylindereinheiten 60, 70 und/oder des Schwenkwinkels der Hebel 40, 90, der Geometrie der Hebel 40, 90 und der Kühlschale 50, kann auf die Position der Walze geschlossen werden und bevorzugt ebenfalls auf die Spalthöhe h zwischen der Walze 2 und der Kühlschale 50, da die Kühlschale 50 mit den Hebeln 40, 90 (definiert) verbunden ist.

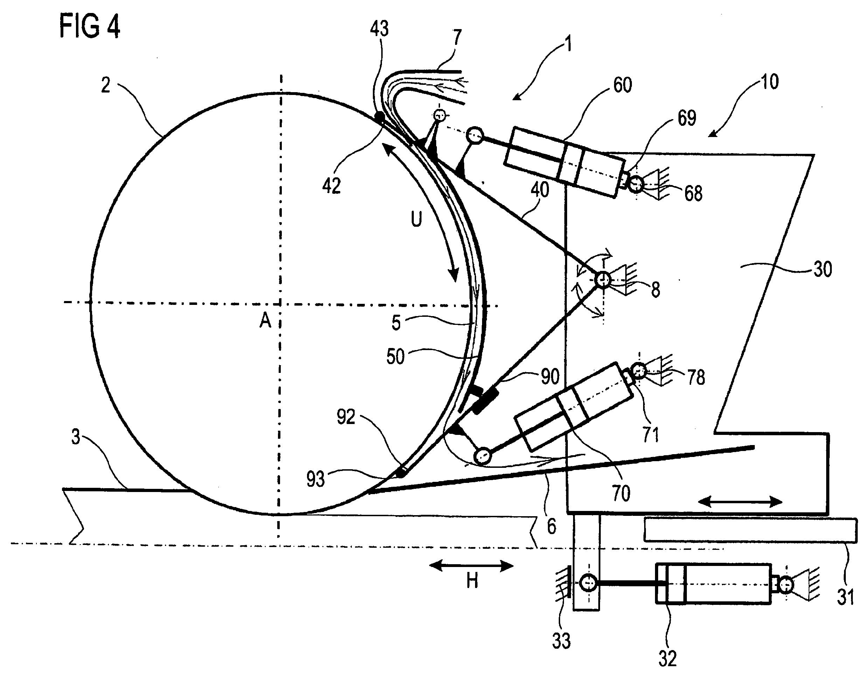

Die Figur 4 offenbart eine Kühleinrichtung 10, welche eine Kühlvorrichtung 1 gemäß den Figuren 1 bis 3 umfasst. Die Kühleinrichtung 10 umfasst einen verfahrbaren Tragrahmen 30, an dem sich die Aufhängungspunkte 8 der Hebel 40, 90 befinden. Ferner sind bevorzugt ebenfalls die Antriebseinheiten, insbesondere schwenkbar, an Aufhängungspunkten 68, 78 an dem Tragrahmen 30 gelagert. Die Punkte 68, 78, 8 sind vorzugsweise relativ zueinander ortsfest. Der Tragrahmen 30 ist vorzugsweise horizontal verschiebbar ausgebildet, sodass er im Wesentlichen in horizontaler Richtung H in Richtung der zu kühlenden Walze 2 oder entgegengesetzt zu dieser Richtung verfahrbar ist. Zum Beispiel kann der Tragrahmen 30 auf einer Gleitleiste 31 gelagert sein. Alternativ sind zum Beispiel auch Rollen möglich. Die Verstellung kann mittels eines Antriebs 32 erfolgen, zum Beispiel durch einen hydraulischen oder elektrischen Antrieb. Ferner kann die Einrichtung 10 über einen Anschlag 33 verfügen, welcher eine Kollision der Kühlschale 5 mit der Walze 2 durch Verfahren des Tragrahmens 30 verhindert.

Falls gewünscht, können mehrere der oben beschriebenen Vorrichtungen 1 bzw. Einrichtungen 10 an eine Walze 2 angestellt werden, zum Beispiel ein- und auslaufseitig einer Walze 2 bzw. eines Walzgerüsts.

Ferner wurden die Hebel 40, 90 in Bezug auf die Anordnung in den Figuren 1 bis 3 beschrieben. Der erste Hebel 40 kann allerdings ebenfalls mit dem zweiten Hebel 90 getauscht werden, sodass der untere Hebel 90 mit der Kühlschale 50 drehbar verbunden ist und der obere Hebel 40 verschiebbar mit dem oberen Endbereich 51 der Kühlschale 50 verbunden ist.

Die oben beschriebenen Ausführungsbeispiele dienen vor allem dem besseren Verständnis der Erfindung und sollten nicht einschränkend verstanden werden. Der Schutzumfang der vorliegenden Patentanmeldung ergibt sich aus den Patentansprüchen.

Die Merkmale der beschriebenen Ausführungsbeispiele können miteinander kombiniert werden oder gegeneinander ausgetauscht werden.

Ferner können die beschriebenen Merkmale durch den Fachmann an vorhandene Gegebenheiten oder vorliegende Anforderungen angepasst werden.

### Bezugszeichenliste

- 1: Kühlvorrichtung
- 2: Walze / Arbeitswalze
- 3: Metallband / Walzgut
- 4: Drehpunkt / Drehgelenk
- 5: Kühlspalt
- 6: Abstreifer
- 7: Düse
- 8: Aufhängungspunkt
- 10: Kühleinrichtung
- 30: Tragrahmen
- 31: Gleitleiste
- 32: Antriebseinheit
- 33: Anschlag
- 40: erster Hebel
- 41: erster Endbereich des ersten Hebels
- 42: Ende des ersten Hebels am ersten Endbereich
- 43: am Ende des ersten Hebels liegende Rolle
- 43': Position des Ende des ersten Hebels bei zweitem Walzendurchmesser
- 44: Arm zur Verbindung des ersten Endbereichs der Kühlschale mit dem Drehpunkt
- 45: Arm zur Verbindung des ersten Endbereichs des ersten Hebels mit dem Drehpunkt
- 49: zweiter Endbereich des ersten Hebels
- 50: Kühlschale
- 51: in Umfangsrichtung der Walze betrachtet erster Endbereich der Kühlschale
- 59: in Umfangsrichtung der Walze betrachtet zweiter Endbereich der Kühlschale
- 60: erste Antriebseinheit / Kolbenzylindereinheit
- 61: erstes Ende der ersten Kolbenzylindereinheit
- 68: Schwenkpunkt der ersten Kolbenzylindereinheit
- 69: zweites Ende der ersten Kolbenzylindereinheit
- 70: zweite Antriebseinheit / Kolbenzylindereinheit
- 71: erstes Ende der zweiten Kolbenzylindereinheit
- 78: Schwenkpunkt der zweiten Kolbenzylindereinheit
- 79: zweites Ende der zweiten Kolbenzylindereinheit
- 90: zweiter Hebel
- 91: erster Endbereich des zweiten Hebels
- 92: Ende des zweiten Hebels am ersten Endbereich
- 93: am Ende des zweiten Hebels liegende Rolle
- 93': Position des Ende des zweiten Hebels bei zweitem Walzendurchmesser
- 94: Gleitleiste
- 95: Gleitstein
- 99: zweiter Endbereich des zweiten Hebels
- A: Walzenachse
- d: erster Walzendurchmesser
- d': zweiter Walzendurchmesser
- D: Drehrichtung der Walze
- h: Höhe des Kühlspalts / Abstand zwischen Kühlschale und Walzenoberfläche
- H: horizontale Richtung
- U: Umfangsrichtung der Walze / zur Walzenoberfläche parallele Richtung

## Patentansprüche

1. Vorrichtung (1) zum Kühlen einer Walze (2), insbesondere einer Arbeitswalze (2) zum Walzen von Walzgut (3), umfassend:
eine zumindest einem Teilbereich des Umfangs der Walzenoberfläche gegenüberliegende Kühlschale (50) zum Bilden eines mit Kühlfluid durchströmbaren Kühlspalts (5) zwischen dem Teilbereich der Walzenoberfläche und der Kühlschale (50),
**dadurch gekennzeichnet, dass** die Vorrichtung (1) weiterhin Folgendes umfasst:
einen ersten, um einen Aufhängungspunkt (8) schwenkbaren Hebel (40), welcher in Richtung der Walzenoberfläche schwenkbar ist und mit einem, in Umfangsrichtung (U) der Walze (2) betrachtet, ersten Endbereich (51) der Kühlschale (50) drehbar verbunden ist und
einen zweiten, um einen weiteren Aufhängungspunkt (8) schwenkbaren Hebel (90), welcher in Richtung der Walzenoberfläche schwenkbar ist und mit dem, in Umfangsrichtung (U) der Walze (2) betrachtet, zweiten Endbereich (59) der Kühlschale (50) relativ zueinander verschiebbar verbunden ist,
sodass der Kühlspalt (5) durch Schwenken der Hebel (40, 90) wahlweise verringerbar oder vergrößerbar ist.

2. Die Vorrichtung gemäß Anspruch 1, wobei der zweite Endbereich (59) der Kühlschale (50) gleitend oder rollend mit dem zweiten Hebel (90) verbunden ist.

3. Die Vorrichtung gemäß Anspruch 1 oder 2, wobei der zweite Endbereich (59) der Kühlschale (50), derart mit dem zweiten Hebel (90) verbunden ist, dass dieser sich bei Bewegung des zweiten Hebels (90) auf einer definierten Bahn bewegt.

4. Die Vorrichtung gemäß einem der vorhergehenden Ansprüche, wobei die Aufhängungspunkte (8) der Hebel (40, 90) gegenüberliegend der von der Walzenoberfläche abgewandten Seite der Kühlschale (50) angeordnet sind.

5. Die Vorrichtung gemäß einem der vorhergehenden Ansprüche, wobei die sich jeweils durch die Aufhängungspunkte (8) erstreckende Schwenkachse sich im Wesentlichen parallel zur Walzenachse (A) erstreckt und wobei die beiden Aufhängungspunkte (8) vorzugsweise zusammenfallen.

6. Die Vorrichtung gemäß einem der vorhergehenden Ansprüche, wobei die Vorrichtung weiterhin eine Düse (7) zum Einleiten von Kühlmedium, vorzugsweise von Kühlflüssigkeit, in den Spalt (5) umfasst, welche an einem der Endbereiche (51, 59) der Kühlschale (50) zum im Wesentlichen tangentialen Einleiten des Kühlmediums, insbesondere entgegen der Drehrichtung (D) der Walze (2), in den Spalt (5) ausgebildet ist.

7. Die Vorrichtung gemäß einem der vorhergehenden Ansprüche, weiterhin umfassend:
eine erste Antriebseinheit (60) zum Schwenken des ersten Hebels (40) um den ersten Aufhängungspunkt (8) und
eine zweite Antriebseinheit (70) zum Schwenken des zweiten Hebels (90) um den weiteren Aufhängungspunkt (8).

8. Die Vorrichtung gemäß einem der vorhergehenden Ansprüche, wobei der erste Hebel (40) einen ersten Endbereich (41) und einen zweiten Endbereich (49) aufweist, und der erste Endbereich (41) drehbar mit dem, in Umfangsrichtung (U) der Walze (2) betrachtet, ersten Endbereich (51) der Kühlschale (50) verbunden ist und dessen zweiter Endbereich (49) schwenkbar an dem ersten Aufhängungspunkt (8) lagerbar ist; und
der zweite Hebel (90) einen ersten Endbereich (91) und einen zweiten Endbereich (99) umfasst, wobei dessen erster Endbereich (91) verschiebbar mit dem in Umfangsrichtung (U) der Walze betrachtet zweiten Endbereich (59) der Kühlschale (50) verbunden ist und dessen zweiter Endbereich (99) schwenkbar an dem weiteren Aufhängungspunkt (8) lagerbar ist.

9. Die Vorrichtung gemäß Anspruch 7 und 8, wobei die erste und die zweite Antriebseinheit (60, 70) jeweils mit dem ersten Endbereich (41, 91) der Hebel (40, 90) zum Schwenken der Hebel (40, 90) verbunden sind.

10. Die Vorrichtung gemäß Anspruch 8 oder 9, wobei
der erste Hebel (40) an seinem ersten Endbereich (41) ein Ende (42) zur Kontaktierung der Walzenoberfläche umfasst und der zweite Hebel (90) an seinem ersten Endbereich (91) ein Ende (92) zur Kontaktierung der Walzenoberfläche umfasst; und wobei - optional -
die Enden (42, 92) je eine drehbare Rolle (43, 93) zur Kontaktierung der Walzenoberfläche umfassen.

11. Die Vorrichtung gemäß Anspruch 10, wobei die Vorrichtung derart ausgebildet ist, dass das Ende (42) des ersten Hebels (40) in Umfangsrichtung (U) der Walze (2) betrachtet die Walzenoberfläche vor dem ersten Endbereich (51) der Kühlschale (50) kontaktiert und das Ende (92) des zweiten Hebels (90) in Umfangsrichtung (U) der Walze (2) betrachtet die Walzenoberfläche hinter dem zweiten Endbereich (59) der Kühlschale (50) kontaktiert.

12. Die Vorrichtung gemäß Anspruch 10 oder 11, wobei, bei Kontakt der beiden Enden (42, 92) der Hebel (40, 90) mit der Walzenoberfläche, der zwischen den Enden (42, 92) der Hebel (40, 90) liegende Teilbereich der Walzenoberfläche sowie der erste Hebel (40) und der zweite Hebel (90) in einer zur Walzenachse (A) senkrecht liegenden Ebene im Wesentlichen ein Dreieck aufspannen, wobei die Walzenoberfläche eine gekrümmte Seite des Dreiecks bildet und die beiden Hebel (40, 90) die anderen beiden Seiten des Dreiecks bilden.

13. Die Vorrichtung gemäß einem der Ansprüche 10 bis 12, wobei
das erste Ende (41) des ersten Hebels (40) mit dem ersten Endbereich (51) der Kühlschale (50) über einen Drehpunkt (4) verbunden ist;
die Vorrichtung einen mit dem ersten Hebel (40) starr verbundenen ersten Arm (44) umfasst sowie einen mit dem ersten Endbereich (51) der Kühlschale (50) starr verbundenen zweiten Arm (45); und wobei
der Drehpunkt (4) mit dem ersten Hebel (40) über den ersten Arm (44) verbunden ist und die Kühlschale (50) über den zweiten Arm (45) mit dem Drehpunkt (4) verbunden ist; und
der Drehpunkt (4) in einer senkrecht zur axialen Richtung (A) der Walze (2) stehenden Ebene beweglich ist.

14. Die Vorrichtung gemäß einem der Ansprüche 10 bis 13, wobei die Hebel (40, 90) jeweils derart um ihren jeweiligen Aufhängungspunkt (8) schwenkbar angeordnet sind, dass sie durch Schwenken jeweils mit dem an ihrem ersten Endbereich (41, 91) liegenden Ende (42, 92) mit der Walzenoberfläche in Kontakt bringbar und wieder von dieser abhebbar sind.

15. Die Vorrichtung gemäß einem der Ansprüche 9 bis 14, wobei die Antriebseinheiten (60, 70) jeweils Kolbenzylindereinheiten (60, 70) umfassen, welche bevorzugt an einem ihrer Enden (61, 71) starr mit dem ersten Endbereich (41, 91) des jeweiligen Hebels (40, 90) zum Schwenken des Hebels (40, 90) verbunden sind und an ihrem zweiten Ende (69, 79) drehbar gelagert sind; und wobei - optional -
die Kolbenzylindereinheiten (60, 70) jeweils über einen starren Arm (65, 75) mit dem ersten Endbereich (41, 91) des jeweiligen Hebels (40, 90) verbunden sind.

16. Die Vorrichtung gemäß einem der Ansprüche 10 bis 15, wobei der zweite Endbereich (59) der Kühlschale (50) mit dem ersten Endbereich (91) des zweiten Hebels (90) über mindestens ein elastisches Element oder eine Führungsschiene verbunden ist.

17. Die Vorrichtung gemäß einem der Ansprüche 10 bis 16, wobei die Vorrichtung weiterhin ein Auswertungssystem zur Bestimmung der Höhe des Kühlspalts (5) umfasst, welches bei Kontaktierung der Enden (42, 92) der beiden Hebel (40, 90) mit der Walzenoberfläche und nach Maßgabe der bekannten Geometrie und/oder Anordnung der Hebel (40, 90), der Kühlschale (50), der drehbaren Verbindung (4) zwischen dem ersten Hebel (40) und der Kühlschale (50) sowie der Lage der Aufhängungspunkte (8) und des Durchmessers der Walze (2) zur Berechnung der Position der Walze (2) ausgebildet ist.

18. Die Vorrichtung gemäß einem der vorhergehenden Ansprüche, wobei sich die Hebel (40, 90) jeweils stangenförmig in einer senkrecht zur axialen Richtung (A) der Walze (2) betrachteten Ebene zu dem am ersten Endbereich (41, 91) liegenden Ende (42, 92) erstrecken; oder
sich im Wesentlichen plattenförmig in einer parallel zur axialen Richtung (A) der Walze (2) liegenden Ebene erstrecken.

19. Die Kühlvorrichtung gemäß einem der vorhergehenden Ansprüche, weiterhin umfassend einen Abstreifer (6) zum Abstreifen von aus dem Kühlspalt (5) an einem Ende (59) der Kühlschale austretenden Kühlfluid, wobei der Abstreifer (6) sich vorzugsweise plattenförmig von der Oberfläche der Walze (2) weg erstreckt, um eine aus dem Kühlspalt (5) austretende Kühlmittelströmung von der Walze (2) weggerichtet abzuleiten.

20. Eine Kühleinrichtung (10), umfassend die Vorrichtung (1) gemäß einem der vorhergehenden Ansprüche, wobei die Einrichtung (10) einen im Wesentlichen horizontal und unabhängig von der Position der Walze (2) verfahrbaren Tragrahmen (30) umfasst, durch den die Antriebseinheiten (60, 70) und/oder die Hebel (40, 90) an den Aufhängungspunkten (8) getragen werden.

21. Verfahren zur Verwendung der Vorrichtung (1) gemäß einem der Ansprüche 1 bis 19 oder der Einrichtung (10) gemäß Anspruch 20, umfassend einen oder mehrere der folgenden Schritte:
Bereitstellen einer Arbeitswalze (2);
Bestimmen des Durchmessers der Arbeitswalze (2);
Einbauen der Arbeitswalze (2) in ein Walzgerüst;
Annähern der Kühlvorrichtung (1) an die Walzenoberfläche, vorzugsweise mittels des verfahrbaren Tragrahmens (30) gemäß Anspruch 20;
Kontaktieren der Walzenoberfläche durch die Hebel (40, 90), insbesondere durch deren Enden (42, 92), durch Schwenken der Hebel (40, 90) in Richtung der Walzenoberfläche;
Berechnen der Position und/oder des Durchmessers der Arbeitswalze (2);
Abheben der Hebel (40, 90) durch Wegschwenken der Hebel (40, 90) von der Walzenoberfläche;
Einstellen des Abstands (h) der Kühlschale (50) von der Walzenoberfläche durch Schwenken der Hebel (40, 90);
Leiten von Kühlflüssigkeit in den Kühlspalt (5);
Starten eines Walzvorgangs durch die Arbeitswalze (2);
Stoppen des Walzvorgangs;
Vergrößern des Kühlspalts (5) durch Schwenken der Hebel (40, 90) und/oder durch Verfahren der Vorrichtung (1) mittels des Tragrahmens (30) gemäß Anspruch 20; und
Ausbau der Arbeitswalze (2) aus dem Walzgerüst.

## Claims

1. Device (1) for cooling a roll (2), particularly a work roll (2) for the rolling of rolling stock (3), comprising:
a cooling shell (50), which is opposite at least a sub-region of the circumference of the roll surface, for forming a cooling gap (5), through which a cooling fluid can flow, between the sub-region of the roll surface and the cooling shell (50),
**characterised in that** the device (1) further comprises the following:
a first lever (40), which is pivotable about a suspension point (8) and in the direction of the roll surface and which is rotatably connected with an end region (51), which is first as considered in the circumferential direction (U) of the roll (2), of the cooling shell (50), and
a second lever (90), which is pivotable about a further suspension point (8) and in the direction of the roll surface and which is connected with the end region (59), which is second as considered in the circumferential direction (U) of the roll (2), of the cooling shell (50) to be displaceable relative to one another,
so that the cooling gap (5) can be selectably reduced or increased by pivotation of the levers (40, 90).

2. The device according to claim 1, wherein the second end region (59) of the cooling shell (50) has a sliding or rolling connection with the second lever (90).

3. The device according to claim 1 or 2, wherein the second end region (59) of the cooling shell (50) is so connected with the second lever (90) that this moves on a defined track when the second lever (90) is moved.

4. The device according to any one of the preceding claims, wherein the suspension points (8) of the levers (40, 90) are arranged opposite the side of the cooling shell (50) remote from the roll surface.

5. The device according to any one of the preceding claims, wherein the pivot axis extending through each of the suspension points (8) extends substantially parallel to the roll axis (A) and wherein the two suspension points (8) preferably coincide.

6. The device according to any one of the preceding claims, wherein the device further comprises a nozzle (7) for introducing coolant, preferably cooling liquid, into the gap (5), which nozzle is constructed at one of the end regions (51, 59) of the cooling shell (50) for substantially tangential introduction of the coolant, particularly counter to the rotational direction (D) of the roll (2), into the gap (5).

7. The device according to any one of the preceding claims, further comprising:
a first drive unit (60) for pivotation of the first lever (40) about the first suspension point (8) and
a second drive unit (70) for pivotation of the second lever (90) about the further suspension point (8).

8. The device according to any one of the preceding claims, wherein
the first lever (40) has a first end region (41) and a second end region (49), the first end region (41) being rotatably connected with the end region (51), which is first as considered in the circumferential direction (U) of the roll (2), of the cooling shell (50) and the second end region (49) being pivotably mountable at the first suspension point (8); and
the second lever (90) has a first end region (91) and a second end region (99), wherein the first end region (91) thereof is displaceably connected with the end region (59), which is second as considered in the circumferential direction (U) of the roll, of the cooling shell (50) and the second end region (99) thereof is pivotably mountable at the second suspension point (8).

9. The device according to claim 7 and 8, wherein the first and second drive units (60, 70) are, for pivotation of the levers (40, 90), respectively connected with the first end regions (41, 91) of the levers (40, 90).

10. The device according to claim 8 or 9, wherein
the first lever (40) has at its first end region (41) an end (42) for contacting the roll surface and the second lever (90) has at its first end region (91) an end (92) for contacting the roll surface; and wherein optionally
the ends (42, 92) each have a rotatable roller (43, 93) for contacting the roll surface.

11. The device according to claim 10, wherein the device is so constructed that the end (42) of the first lever (40) as considered in the circumferential direction (U) of the roll (2) contacts the roll surface in front of the first end region (51) of the cooling shell (50) and the end (92) of the second lever (90) as considered in the circumferential direction (U) of the roll (2) contacts the roll surface behind the second end region (59) of the cooling shell (50).

12. The device according to claim 10 or 11, wherein when the two ends (42, 92) of the levers (40, 90) are in contact with the roll surface the sub-region, which is between the ends (42, 92) of the levers (40, 90), of the roll surface as well as the first lever (40) and the second lever (90) substantially span a triangle in a plane lying perpendicularly to the roll axis (A), wherein the roll surface forms a curved side of the triangle and the two levers (40, 90 form the other two sides of the triangle.

13. The device according to any one of claim 10 to 12, wherein
the first end (41) of the first lever (40) is connected with the first end region (51) of the cooling shell (50) by way of a fulcrum (4); and
the device comprises a first arm (44) rigidly connected with the first lever (40) and a second arm (45) rigidly connected with the first end region (51) of the cooling shell (50); and wherein
the fulcrum (4) is connected with the first lever (40) by way of the first arm (44) and the cooling shell (50) is connected with the fulcrum (4) by way of the second arm (45); and
the fulcrum (4) is movable in a plane perpendicular to the axial direction (A) of the roll (2).

14. The device according to any one of claims 10 to 13, wherein the levers (40, 90) are each arranged to be so pivotable about the respective suspension point (8) thereof that through pivotation each can be brought into contact with the roll surface by the end (42, 92) lying at its first end region (41, 91) and can be lifted off this again.

15. The device according to any one of claims 9 to 14, wherein the drive units (60, 70) respectively comprise piston-cylinder units (60, 70), which for pivotation of the lever (40, 90) are preferably rigidly connected at one of the ends (61, 71) thereof with the first end region (41, 91) of the respective lever (40, 90) and are rotatably mounted at the second end (69 79) thereof; and wherein optionally
the piston-cylinder units (60, 70) are each connected by way of a rigid arm (65, 75) with the first end region (41, 91) of the respective lever (40, 90).

16. The device according to any one of claims 10 to 15, wherein the second end region (59) of the cooling shell (50) is connected with the first end region (91) of the second lever (90) by way of at least one resilient element or a guide rail.

17. The device according to any one of claims 10 to 16, wherein the device further comprises an evaluating system for determining the height of the cooling gap (5), which is configured for calculation of the position of the roll (2) in the case of contact of the ends (42, 92) of the two levers (40, 90) with the roll surface and in accordance with the known geometry and/or arrangement of the levers (40, 90), the cooling shell (50), the rotatable connection (4) between the first lever (40) and the cooling shell (50) as well as the position of the suspension points (8) and the diameter of the roll (2).

18. The device according to any one of the preceding claims, wherein the levers (40, 90) each extend in rod-shaped manner in a plane, as considered perpendicularly to the axial direction (A) of the roll (2), towards the end (42, 92) lying at the first end region (41, 91); or
extend in substantially plate-shaped manner in a plane lying parallel to the axial direction (A) of the roll (2).

19. The cooling device according to any one of the preceding claims, further comprising a stripper (6) for stripping cooling fluid issuing from the cooling gap (5) at an end (59) of the cooling shell, wherein the stripper (6) extends in preferably plate-shaped manner away from the surface of the roll (2) so as to conduct a coolant flow, which issues from the cooling gap (5), away from the roll (2).

20. Cooling equipment (10) comprising the device (1) according to any one of the preceding claims, wherein the equipment (10) comprises a support frame (30) which is movable substantially horizontally and independently of the position of the roll (2) and by which the drive units (60, 70) and/or the levers (40, 90) are supported at the suspension points (8).

21. Method for using the device (1) according to any one of claims 1 to 19 or the equipment (10) according to claim 20, comprising one or more of the following steps:
providing a work roll (2);
determining the diameter of the work roll (2);
installing the work roll (2) in a roll stand;
causing the cooling device (1) to approach the roll surface, preferably by means of the movable support frame (30) according to claim 20;
contacting the roll surface by the levers (40, 90), particularly by the ends (42, 92) thereof, through pivotation of the levers (40, 90) in the direction of the roll surface;
calculating the position and/or the diameter of the work roll (2);
lifting off the levers (40, 90) by pivotation of the levers (40, 90) away from the roll surface;
setting the spacing (h) of the cooling shell (50) from the roll surface by pivotation of the levers (40, 90);
conducting cooling liquid into the cooling gap (5);
starting a rolling process by the work roll (2);
stopping the rolling process;
enlarging the cooling gap (5) by pivotation of the levers (40, 90) and/or by movement of the device (1) by means of the support frame (30) in accordance with claim 20; and
demounting the work roll (2) from the roll stand.

## Revendications

1. Dispositif (1) pour le refroidissement d'un cylindre (2), en particulier d'un cylindre de travail (2) destiné au laminage d'un produit de laminage (3), comprenant :
une enveloppe de refroidissement (50) opposée à au moins une zone partielle de la périphérie de la surface du cylindre pour obtenir une fente de refroidissement (5), qui peut être traversée par un fluide de refroidissement, entre la zone partielle de la surface du cylindre et l'enveloppe de refroidissement (50) ;
**caractérisé en ce que** le dispositif (1) comprend également ce qui suit :
un premier levier (40) apte à pivoter autour d'un point de suspension (8), qui est apte à pivoter dans la direction de la surface du cylindre et qui est relié en rotation à une première zone terminale (51) de l'enveloppe de refroidissement (50), lorsqu'on regarde dans la direction de la périphérie (U) du cylindre (2) ; et
un deuxième levier (90) apte à pivoter autour d'un autre point de suspension (8), qui est apte à pivoter dans la direction de la surface du cylindre et qui est relié en coulissement réciproque, à une deuxième zone terminale (59) de l'enveloppe de refroidissement (50), lorsqu'on regarde dans la direction de la périphérie (U) du cylindre (2) ;
d'une manière telle que la fente de refroidissement (5) peut être diminuée ou agrandie selon ce que l'on souhaite par pivotement des leviers (40, 90).

2. Dispositif selon la revendication 1, dans lequel la deuxième zone terminale (59) de l'enveloppe de refroidissement (50) est reliée en glissement ou en roulement au deuxième levier (90).

3. Dispositif selon la revendication 1 ou 2, dans lequel la deuxième zone terminale (59) de l'enveloppe de refroidissement (50) est reliée au deuxième levier (90) d'une manière telle qu'elle se déplace sur une voie définie lors du déplacement du deuxième levier (90).

4. Dispositif selon l'une quelconque des revendications précédentes, dans lequel les points de suspension (8) des leviers (40, 90) sont disposés à l'opposé du côté de l'enveloppe de refroidissement (50) qui se détourne de la surface du cylindre.

5. Dispositif selon l'une quelconque des revendications précédentes, dans lequel les axes de pivotement qui s'étendent respectivement en passant par les points de suspension (8) s'étendent essentiellement parallèlement à l'axe (A) du cylindre et dans lequel les deux points de suspension (8) de préférence coïncident.

6. Dispositif selon l'une quelconque des revendications précédentes, dans lequel le dispositif comprend en outre une buse (7) pour l'introduction d'un fluide de refroidissement, de préférence d'un liquide de refroidissement, dans la fente (5), qui est réalisée à une des zones terminales (51, 59) de l'enveloppe de refroidissement (50) pour l'introduction essentiellement tangentielle du fluide de refroidissement, en particulier à l'encontre de la direction de rotation (D) du cylindre (2), dans la fente (5).

7. Dispositif selon l'une quelconque des revendications précédentes, comprenant en outre :
une première unité d'entraînement (60) pour le pivotement du premier levier (40) autour du premier point de suspension (8) et ;
une deuxième unité d'entraînement (70) pour le pivotement du deuxième levier (90) autour du deuxième point de suspension (8).

8. Dispositif selon l'une quelconque des revendications précédentes, dans lequel le premier levier (40) présente une première zone terminale (41) et une deuxième zone terminale (49), la première zone terminale (41) étant reliée en rotation avec la première zone terminale (51) de l'enveloppe de refroidissement (50), lorsqu'on regarde dans la direction de la périphérie (U) du cylindre (2), et la deuxième zone terminale (49) pouvant être montée en pivotement contre le premier point de suspension (8) ; et
le deuxième levier (90) présente une première zone terminale (91) et une deuxième zone terminale (99), la première zone terminale (91) étant reliée en coulissement avec la deuxième zone terminale (59) de l'enveloppe de refroidissement (50), lorsqu'on regarde dans la direction de la périphérie (U) du cylindre, et la deuxième zone terminale (99) pouvant être montée en pivotement contre l'autre point de suspension (8).

9. Dispositif selon les revendications 7 et 8, dans lequel la première et la deuxième unité d'entraînement (60, 70) sont reliées respectivement à la première zone terminale (41, 91) des leviers (40, 90) pour le pivotement des leviers (40, 90).

10. Dispositif selon la revendication 8 ou 9, dans lequel le premier levier (40) comprend, à sa première zone terminale (41), une extrémité (42) pour la mise en contact avec la surface du cylindre et le deuxième levier (90) comprend, à sa première zone terminale (91), une extrémité (92) pour la mise en contact avec la surface du cylindre ; et dans lequel - de manière facultative - les extrémités (42, 92) comprennent respectivement un galet rotatif (43, 93) pour la mise en contact avec la surface du cylindre.

11. Dispositif selon la revendication 10, dans lequel le dispositif est réalisé d'une manière telle que l'extrémité (42) du premier levier (40), lorsqu'on regarde dans la direction de la périphérie (U) du cylindre (2), entre en contact avec la surface du cylindre devant la première zone terminale (51) de l'enveloppe de refroidissement (50) et l'extrémité (92) du deuxième levier (90), lorsqu'on regarde dans la direction de la périphérie (U) du cylindre (2), entre en contact avec la surface du cylindre derrière la deuxième zone terminale (59) de l'enveloppe de refroidissement (50).

12. Dispositif selon la revendication 10 ou 11, dans lequel, lors de la mise en contact des deux extrémités (42, 92) des leviers (40, 90) avec la surface du cylindre, la zone partielle de la surface du cylindre qui se trouve entre les extrémités (42, 92) des leviers (40, 90), ainsi que le premier levier (40) et le deuxième levier (90) forment essentiellement un triangle dans un plan disposé perpendiculairement à l'axe (A) du cylindre, la surface du cylindre formant le côté incurvé du triangle et les deux leviers (40, 90) formant les deux autres côtés du triangle.

13. Dispositif selon l'une quelconque des revendications 10 à 12, dans lequel : la première extrémité (41) du premier levier (40) est reliée à la première zone terminale (51) de l'enveloppe de refroidissement (50) via un centre de rotation (4) ; le dispositif comprend un premier bras (44) relié à demeure au premier levier (40) ainsi qu'un deuxième bras (45) relié à demeure à la première zone terminale (51) de l'enveloppe de refroidissement (50) ; et dans lequel le centre de rotation (4) est relié au premier levier (40) via le premier bras (44) et l'enveloppe de refroidissement (50) est reliée au centre de rotation (4) via le deuxième bras (45) ; et le centre de rotation (4) est mobile dans un plan perpendiculaire à la direction axiale (A) du cylindre (2).

14. Dispositif selon l'une quelconque des revendications 10 à 13, dans lequel les leviers (40, 90) sont disposés respectivement en pivotement autour de leur point de suspension respectif (8) d'une manière telle que par pivotement, respectivement avec l'extrémité (42, 92) située contre leur première zone terminale (41, 91), ils peuvent être amenés en contact avec la surface du cylindre et s'en séparer à nouveau par soulèvement.

15. Dispositif selon l'une quelconque des revendications 9 à 14, dans lequel les unités d'entraînement (60, 70) comprennent respectivement des unités du type à piston-cylindre (60, 70) qui sont reliées, de préférence, à une de leurs extrémités (61, 71) à demeure à la première zone terminale (41, 91) du levier respectif (40, 90) pour le pivotement du levier (40, 90) et qui sont montées en rotation à leur deuxième extrémité (69, 79), et dans lequel - de manière facultative - les unités du type à piston-cylindre (60, 70) sont reliées respectivement via un bras rigide (65, 75) à la première zone terminale (41, 91) du levier respectif (40, 90).

16. Dispositif selon l'une quelconque des revendications 10 à 15, dans lequel la deuxième zone terminale (59) de l'enveloppe de refroidissement (50) est reliée à la première zone terminale (91) du deuxième levier (90) via au moins un élément élastique ou un rail de guidage.

17. Dispositif selon l'une quelconque des revendications 10 à 16, dans lequel le dispositif comprend en outre un système d'évaluation pour la détermination de la hauteur de la fente de refroidissement (5), qui est réalisé pour le calcul de la position du cylindre (2) lors de la mise en contact des extrémités (42, 92) des deux leviers (40, 90) avec la surface du cylindre et en fonction de la géométrie connue et/ou de l'agencement des leviers (40, 90), de l'enveloppe de refroidissement (50), de la liaison rotative (4) entre le premier levier (40) et l'enveloppe de refroidissement, de la position des points de suspension (8) et du diamètre du cylindre (2).

18. Dispositif selon l'une quelconque des revendications précédentes, dans lequel les leviers (40, 90) s'étendent respectivement en formant une barre, dans un plan envisagé perpendiculairement à la direction axiale (A) du cylindre (2), en direction de l'extrémité (42, 92) située à la première zone terminale (41, 91) ; ou s'étendent en formant essentiellement une plaque dans un plan situé parallèlement à la direction axiale (A) du cylindre (2).

19. Dispositif selon l'une quelconque des revendications précédentes, comprenant en outre un racleur (6) pour le raclage du fluide de refroidissement qui quitte la fente de refroidissement (5) à une extrémité (59) de l'enveloppe de refroidissement, le racleur (6) s'étendant de préférence sous la forme d'une plaque à partir de la surface du cylindre (2) afin de dévier de manière ciblée par rapport au cylindre (2) un courant de fluide de refroidissement qui quitte la fente de refroidissement (5).

20. Mécanisme de refroidissement (10) comprenant le dispositif (1) selon l'une quelconque des revendications précédentes, le mécanisme (10) comprenant un cadre de support (30) essentiellement horizontal et apte à se déplacer indépendamment de la position du cylindre (2), qui supporte les unités d'entraînement (60, 70) et/ou les leviers (40, 90) aux points de suspension (8).

21. Procédé pour l'utilisation du dispositif (1) selon l'une quelconque des revendications 1 à 19 ou du mécanisme (10) selon la revendication 20, comprenant une ou plusieurs des étapes reprises ci-après dans lesquelles :
on procure un cylindre de travail (2) ;
on détermine le diamètre du cylindre de travail (2) ;
on incorpore le cylindre de travail (2) dans une cage de laminoir ;
on rapproche le dispositif de refroidissement (1) de la surface du cylindre, de préférence au moyen du cadre de support mobile (30) conformément à la revendication 20 ;
on met en contact avec la surface du cylindre via les leviers (40, 90), en particulier via les extrémités (42, 92) de ces derniers, par pivotement des leviers (40, 90) en direction de la surface du cylindre ;
on calcule la position et/ou le diamètre du cylindre de travail (2) ;
on soulève les leviers (40, 90) en éloignant par pivotement les leviers (40, 90) de la surface du cylindre ;
on règle la distance (h) de l'enveloppe de refroidissement (50) par rapport à la surface du cylindre par pivotement des leviers (40, 90) ;
on guide un liquide de refroidissement dans la fente de refroidissement (5) ;
on démarre un processus de laminage via le cylindre de travail (2) ;
on arrête le processus de laminage ;
on agrandit la fente de refroidissement (5) par pivotement des leviers (40, 90) et/ou par déplacement du dispositif (1) au moyen du cadre de support (30) conformément à la revendication 20 ; et
on démonte le cylindre de travail (2) par rapport à la cage de laminoir.
